# FASCICULE DE BREVET EUROPEEN

(11) **EP 1 390 922 B1**
(45) Date de publication et mention de la délivrance du brevet: **10.11.2004**
(21) Numéro de dépôt: 02738271.2
(22) Date de dépôt: 17.05.2002
(51) Int. Cl.: G07F 17/10, G07F 7/00, G07F 15/00

(54) **SYSTEME DE GESTION D'UNE FLOTTE DE BICYCLETTES, BICYCLETTE ET EQUIPEMENTS DE STOCKAGE POUR UN TEL DISPOSITIF**
VERWALTUNGSSYSTEM FÜR EINE FAHRRADFLOTTE, FAHRRAD UND ANORDNUNGEN ZUM LAGERN EINER DERARTIGEN VORRICHTUNG
SYSTEM FOR MANAGING A FLEET OF BICYCLES, BICYCLES AND STORAGE EQUIPMENT FOR SUCH A DEVICE

(30) Priorité: 21.05.2001 FR 0106668
(43) Date de publication de la demande: 25.02.2004
(73) Titulaire: Jcdecaux, 92200 Neuilly-Sur-Seine (FR)
(72) Inventeur: LE GARS, Jacques, F-78950 Gambais (FR); GAGOSZ, Jean-Claude, F-28410 Bu (FR); MAILLE, Grégoire, F-75019 Paris (FR)
(74) Mandataire: Burbaud, Eric
(86) Numéro de dépôt international: PCT/FR2002/001685
(87) Numéro de publication internationale: WO 2002/095698

(56) Documents cités:
- EP-A- 0 875 867
- FR-A- 2 662 285
- FR-A- 2 744 543
- GB-A- 2 178 211

## Description

La présente invention concerne le domaine de la gestion d'une flotte de bicyclettes destinées à un usage collectif, par exemple sous la forme de location.

On connaît dans l'état de la technique différentes solutions comprenant généralement des équipements de stockage répartis dans la zone d'utilisation, par exemple une ville ou un site industriel, et des bicyclettes qui doivent être restituées sur l'un quelconque des équipements de stockage. Les utilisateurs disposent de façon connue d'un support d'information, par exemple une carte prépayée ou une carte d'abonnement, leur permettant de libérer une bicyclette et de l'utiliser.

La demande de brevet européen EP-A-O 875 867 propose un système destiné à réduire les risques de non restitution d'une bicyclette. Ce système automatisé de stockage comprend :
- une pluralité de bicyclettes munies chacune d'un circuit électronique pour recevoir un identifiant, le circuit électronique de la bicyclette comportant une mémoire électronique vive et des moyens d'enregistrement et de lecture,
- au moins un équipement d'entreposage présentant au moins une zone d'accrochage pour bicyclette, et comprenant des moyens de lecture de l'identifiant enregistré dans le circuit électronique de la bicyclette placée dans ladite zone d'accrochage,
- une pluralité de supports d'information destinés à être remis à des utilisateurs de façon à leur permettre d'accéder aux bicyclettes, chaque support d'information comprenant un identifiant d'utilisateur.

La présente invention vise à proposer un système de gestion d'une flotte de bicyclettes amélioré permettant d'organiser avec plus de souplesse et de sécurité les droits d'utilisation attribuées à un locataire. En particulier, l'invention vise à améliorer la traçabilité des opérations effectuées par un locataire, sous forme indépendante de la bicyclette empruntée, ces bicyclettes étant indifférenciées.

A cet effet, selon l'invention, un système du genre en question est caractérisé en ce que le système comprend des moyens pour transférer au moins l'identifiant d'utilisation issu du support d'information d'un utilisateur vers le circuit électronique d'une bicyclette sélectionnée par ledit utilisateur, au moment de la commande de libération de ladite bicyclette sélectionnée, et en ce que l'identifiant d'utilisateur constitue l'identifiant du circuit électronique de la bicyclette.

Dans divers modes de réalisation de l'invention, on peut avoir recours en outre à l'une et/ou à l'autre des dispositions suivantes :
- chaque équipement d'entreposage comporte une pluralité de zones d'accrochage pour bicyclette, chaque zone d'accrochage comportant un organe de verrouillage électromécanique adapté pour verrouiller une bicyclette et commandé par un calculateur électronique associé à des moyens de lecture de l'identifiant d'utilisateur issu dudit support d'information présenté par un utilisateur, et des moyens d'écriture temporaire dudit identifiant d'utilisateur dans le circuit électronique de la bicyclette, ainsi que des moyens de lecture dudit identifiant d'utilisateur lors de la restitution d'une bicyclette ;
- un serveur relié à chacun des éléments d'entreposage par un réseau de communication ;
- les équipements d'entreposage sont constitués par au moins une borne reliée à des dispositifs d'accrochage de bicyclettes, chaque borne présentant un moyen de lecture du support d'information d'un utilisateur, et des moyens de commande pour déverrouiller une bicyclette accrochée à l'un des dispositifs d'accrochage, chacun des dispositifs d'accrochage comportant un dispositif électromécanique de verrouillage d'une bicyclette ;
- la borne comporte en outre un moyen de saisie d'une information personnelle de l'utilisateur,
- la borne comporte en outre des moyens pour l'enregistrement d'informations dans le support d'information de l'utilisateur ;
- chaque bicyclette comporte en outre des moyens pour transmettre à un équipement d'entreposage l'identifiant d'utilisateur enregistré dans ladite mémoire, lors de la restitution de la bicyclette ;
- le circuit électronique de chaque bicyclette comporte des moyens de transmission radiofréquence pour la transmission d'informations entre la mémoire dudit circuit électronique et l'équipement de stockage ;
- le circuit électronique de chaque bicyclette comporte un connecteur électrique pour la transmission d'informations entre la mémoire dudit circuit électronique et l'équipement de stockage et pour l'alimentation dudit circuit électronique.

Par ailleurs, l'invention a également pour objet un procédé de gestion d'une flotte de bicyclettes, comportant :
- une étape de personnalisation d'un support d'information remis à un utilisateur, étape au cours de laquelle on inscrit dans ledit support d'information au moins un identifiant d'utilisateur,
- une étape de libération d'une bicyclette accrochée à un équipement de stockage,
- et une étape de restitution d'une bicyclette où ladite bicyclette est à nouveau accrochée à un équipement de stockage, étape au cours de laquelle on lit un identifiant contenu dans un circuit électronique de la bicyclette,
caractérisé en ce qu'au cours de l'étape de libération d'une bicyclette, on transfère au moins l'identifiant d'utilisateur issu du support d'information d'un utilisateur vers le circuit électronique de la bicyclette sélectionnée par ledit utilisateur,
et en ce qu'au cours de l'étape de restitution de la bicyclette, l'identifiant lu dans le circuit électronique de la bicyclette est l'identifiant d'utilisateur précédemment transféré dans ledit circuit électronique lors de l'étape de libération.

La présente invention sera mieux comprise à la lecture de la description d'un exemple non limitatif de réalisation qui suit, se référant aux dessins annexés où :

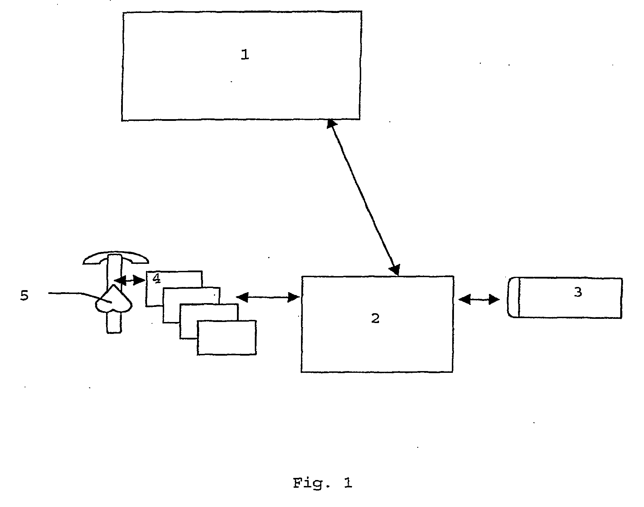

- la figure 1 représente un schéma de principe d'un système selon l'invention,
- la figure 2 représente une vue d'un équipement de stockage.

Le système comprend un serveur 1 relié à une ou plusieurs bornes par un réseau de communication. Chaque borne 2 est elle-même reliée à une ou plusieurs bornettes 4 présentant des moyens d'accrochage d'une bicyclette 5. La borne et les bornettes 4 associées forment un équipement de stockage. L'utilisateur reçoit une carte à mémoire ou un badge 3.

A l'aide de ce badge 3, un utilisateur peut louer une bicyclette 5 à un emplacement et le remiser à un autre emplacement.

Le badge 3 contient des informations sur l'utilisateur (numéro de compte, état civil). Ces informations peuvent être inscrites de façon définitive dans le badge 3, par exemple sur une piste magnétique ou dans une mémoire électronique, voire même sous forme graphique, par exemple de code à barres ou de code matricielle. Elles peuvent aussi être inscrites temporairement dans une mémoire d'une carte réinscriptible, ce qui permet d'individualiser et de modifier les droits accordés à un locataire à tout moment.

La bicyclette 5 contient un circuit électronique en lecture/écriture contenant pendant une période temporelle de location le numéro de client transmis lors de la location. Ce numéro change lors de chaque nouvel emprunt, et est alors remplacé par le numéro d'identification du nouveau locataire. Pendant la période de location la bicyclette empruntée contient le numéro du locataire.

La borne 2 permet la liaison avec le serveur via une communication permanente (type ADSL qui n'est qu'une solution). Elle permet aussi la gestion des vélos, des utilisateurs,

La bornette 4 permet la libération et l'accrochage de la bicyclette 5 ainsi que l'inscription du numéro client dans le moyen d'identification de la bicyclette 5.

Lorsque l'on inscrit dans le moyen d'identification de la bicyclette 5 le numéro du client, la borne 2 transmet au serveur 1 une information du type : Mr X a pris une bicyclette située sur la bornette 4 de la borne 2 ; ce vélo prend l'identité Mr X. Le compte de Mr X est incrémenté de 1 vélo. Lors du retour sur une bornette 4, le serveur communique que la bicyclette de Mr X est revenue sur la bornette 4 de la borne 2 ; on peut donc décrémenter de 1 vélo vers le compte de Mr X.

Les bicyclettes sont équipées d'une puce électronique en lecture/écriture qui contient l'identifiant utilisateur lorsque la bicyclette est en location. Ils sont équipés de deux systèmes de verrouillage : un pour l'accroche de la bicyclette 5 sur la bornette 4 (dit "broche") et un pour un arrêt minute, de type "verrou guidon".

Les Points Vélos ou Bornette 4 servent à remiser les bicyclettes. On peut mettre une bicyclette par bornette 4.

Elles comportent un dispositif de lecture/écriture à distance pour inscrire dans la puce de la bicyclette 5 l'identité de l'utilisateur.

Elles comportent également un dispositif pour l'accroche de la bicyclette 5.

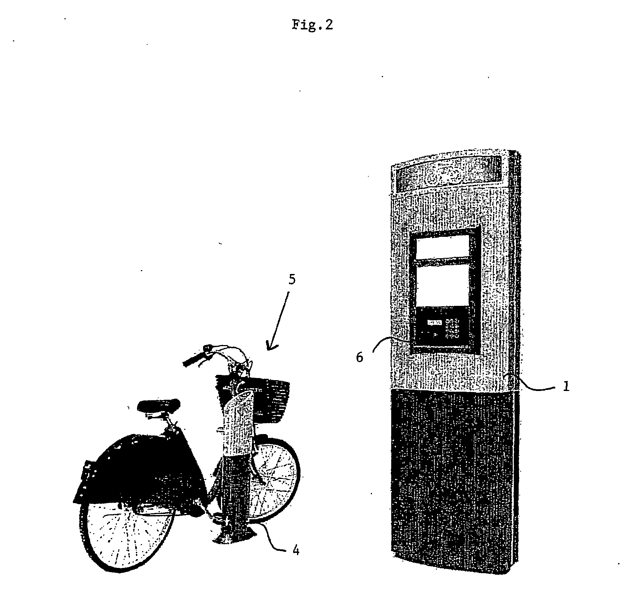

Les bornes 2, telles que celle représentée sur la figure 2, sont reliées aux bornettes 4 (ou points vélos) par des liaisons filaires (alimentation en énergie et transmission de données).

Elles ont un organe 6 de lecture de badge et servent à l'identification de l'utilisateur, ainsi qu'à la vérification de son état de location. La première partie de la procédure de location s'effectue sur ce mobilier.

Elles servent à centraliser les informations des bornettes 4 et à les transmettre au serveur.

Elles sont raccordées à un réseau type ADSL. Ce sont des bornes interactives, à écran tactile et commande vocale, ouverte sur Internet. Elles peuvent délivrer en temps réel l'occupation des parkings, présenter le fonctionnement de la location de vélo..

Les équipements de stockage sont constitués d'un ensemble solidaire de 5 à 20 emplacements à vélos - "point vélo" - qui servent à remiser les bicyclettes et d'un point de service client - "point client" - qui assure l'interface avec l'usager et les échanges avec le serveur.

Ils sont reliés au serveur par ADSL ou autre type de communication rapide.

Les points de ventes sont situés aux endroits de délivrance des badges, ils servent à enregistrer les contrats, à programmer les badges et à informer le serveur de l'opération réalisée.

Chaque point de vente est principalement constitué d'un micro-ordinateur, ainsi que d'un boîtier extérieur pour programmer les badges.

Il est raccordé au Réseau Téléphonique Commuté (RTC) ou autre système de communication (type ADSL) .

Le serveur assure la coordination générale du service et l'exploitation statistique.

Les badges 3 comportent une électronique capable de mémoriser des informations, de les transférer par radio à un lecteur ou bien de les modifier à partir d'un organe complémentaire. C'est une carte à puce sans contact.

Ils servent à identifier un utilisateur et comportent notamment :
- un numéro de contrat,
- une date de péremption,
- un code confidentiel,
- le code de la ville,
- et optionnellement un nombre de bicyclettes autorisées si la pluralité des cycles louables est retenue comme option dans le service).

Ces badges ne comportent pas de pile.

Procédure de Location :

La première étape est le retrait d'un badge :

A la mairie ou dans un autre lieu, retrait de la carte en échange de :
- pièce d'identité,
- justificatif de domicile,
- caution par carte ou par chèque suivant pays (montant suivant nombre de vélos),
- autorisation parentale pour les mineurs,
- le badge est créé en fonction d'un nombre de vélos louables (il peut être de 1 ou plusieurs cycles).

L'étape de location de vélos consiste à :
- passer le badge devant le lecteur,
- taper son code confidentiel,
la borne interroge alors le compte client pour vérifier le nombre de vélos déjà loué pour autoriser ou pas la location de la bicyclette 5.

L'étape suivante consiste à :
- choisir un numéro de bornette 4 (autrement dit un vélo),
- valider cette action.

La borne envoie alors l'autorisation à la bornette 4 choisie de décrocher la bicyclette, sous réserve de confirmation par action sur l'interrupteur présent sur la bornette 4, et inscrit dans la puce de la bicyclette 5 le numéro de client (la bicyclette qui n'avait pas d'identité jusqu'à présent prend celle de l'utilisateur).

Le locataire procède ensuite aux opérations suivantes :
- aller décrocher son vélo depuis la bornette 4,
- lors de l'appui sur l'interrupteur, la bornette 4 libère la broche.

La borne enregistre le client,l'heure et l'emplacement.

(Pour louer un vélo supplémentaire, l'utilisateur réitère toute la procédure (s'il est habilité à le faire)).

Fonctionnement de l'antivol en cours d'utilisation :
- antivol type "blocage du guidon",
- on tourne le guidon, on enclenche au moyen d'une clé une serrure,
- on retire la clé (clé de cadenas conventionnel),
- pour "désenclencher" le système, il suffit de remettre la clé dans la serrure, "désenclencher" le loquet (la clé n'est pas retirable lorsque le guidon n'est pas bloqué).

L'étape de restitution de la bicyclette 5 consiste à :
- ramener la bicyclette sur une bornette 4,
- enclencher la broche dans la bornette 4,
- la bornette 4 lit et purge la puce de la bicyclette 5 (puce contenant l'identifiant du client) et envoie ce numéro à la borne,

Le serveur enregistre les heures de retour, le client pour sa base de données et pour une gestion des fraudes et du flux,
(pour confirmer le retour de la bicyclette 5, l'utilisateur pourra repasser son badge sur la borne, et un message apparaîtra sur l'écran).

Lors de l'utilisation sortant du domaine courant, le procédé peut comporter des étapes additionnelles :
- Procédure de location interrompue :

Si l'utilisateur ne prend pas la bicyclette entre le moment où il a validé son action et le moment où il est supposé prendre son vélo sur la bornette 4, le numéro client de la bicyclette 5 est effacé au moment où la bicyclette est accrochée à une bornette.
- Si la durée de location de la bicyclette 5 est dépassée, la carte est bloquée pendant une journée.

Le blocage définitif de la carte intervient au-delà de 3 jours, la bicyclette étant considérée comme volée.
- Dépassement de la validité de la carte :
(on ne doit pas avoir de vélo en sa possession le jour de l'invalidité de la carte),
Action : Blocage définitif de la carte (environ une semaine avant la date butoir → validité de la carte non pas de 1 an mais 11 mois par exemple).

## Revendications

1. Système de gestion d'une flotte de bicyclettes comprenant :
- une pluralité de bicyclettes (5) munie chacune d'un circuit électronique pour recevoir un identifiant, le circuit électronique de la bicyclette comportant une mémoire électronique vive et des moyens d'enregistrement et de lecture,
- au moins un équipement d'entreposage (2, 4) présentant au moins une zone d'accrochage pour bicyclette, et comprenant des moyens de lecture de l'identifiant enregistré dans le circuit électronique de la bicyclette placée dans ladite zone d'accrochage,
- une pluralité de supports d'information (3) destinés à être remis à des utilisateurs de façon à leur permettre d'accéder aux bicyclettes (5), chaque support d'information comprenant un identifiant d'utilisateur,
**caractérisé en ce que** le système comprend des moyens pour transférer au moins l'identifiant d'utilisateur issu du support d'information (3) d'un utilisateur vers le circuit électronique d'une bicyclette (5) sélectionnée par ledit utilisateur au moment de la commande de libération de ladite bicyclette sélectionnée,
et **en ce que** l'identifiant d'utilisateur constitue l'identifiant du circuit électronique de la bicyclette (5).

2. Système selon la revendication 1, dans lequel chaque équipement d'entreposage (2,4) comporte une pluralité de zones d'accrochage pour bicyclette (5), chaque zone d'accrochage comportant un organe de verrouillage électromécanique adapté pour verrouiller une bicyclette (5) et commandé par un calculateur électronique associé à des moyens de lecture de l'identifiant d'utilisateur issu dudit support d'information (3) présenté par un utilisateur, et des moyens d'écriture temporaire dudit identifiant d'utilisateur dans le circuit électronique de la bicyclette (5), ainsi que des moyens de lecture dudit identifiant d'utilisateur lors de la restitution d'une bicyclette (5).

3. Système selon l'une quelconque des revendications précédentes, comportant en outre un serveur (1) relié à chacun des équipements d'entreposage (2, 4) par un réseau de communication.

4. Système selon l'une quelconque des revendications précédentes, dans lequel les équipements d'entreposage sont constitués par au moins une borne (2) reliée à des dispositifs d'accrochage (4) pour bicyclettes, chaque borne (2) présentant un moyen de lecture (6) du support d'information (3) d'un utilisateur, et des moyens de commande pour déverrouiller une bicyclette (5) accrochée à l'un des dispositifs d'accrochage (4) , chacun des dispositifs d'accrochage (4) comportant un dispositif électromécanique de verrouillage d'une bicyclette.

5. Système selon la revendication 4, dans lequel la borne (2) comporte en outre un moyen de saisie d'une information personnelle de l'utilisateur.

6. Système selon la revendication 4 ou la revendication 5, dans lequel la borne (2) comprend en outre des moyens pour l'enregistrement d'informations dans le support d'information (3) de l'utilisateur.

7. Système selon l'une des revendications précédentes, dans lequel chaque bicyclette (5) comporte en outre des moyens pour transmettre à un équipement d'entreposage (2, 4) l'identifiant d'utilisateur enregistré dans ladite mémoire, lors de la restitution de la bicyclette.

8. Système selon l'une des revendications précédentes, dans lequel le circuit électronique de chaque bicyclette (5) comporte des moyens de transmission radiofréquence pour la transmission d'informations entre la mémoire dudit circuit électronique et l'équipement de stockage.

9. Système selon l'une des revendications précédentes, dans lequel le circuit électronique de chaque bicyclette (5) comporte un connecteur électrique pour la transmission d'informations entre la mémoire dudit circuit électronique et l'équipement de stockage (2, 4) et pour l'alimentation dudit circuit électronique.

10. Procédé de gestion d'une flotte de bicyclettes (5), comportant :
- une étape de personnalisation d'un support d'information remis à un utilisateur, étape au cours de laquelle on inscrit dans ledit support d'information au moins un identifiant d'utilisateur,
- une étape de libération d'une bicyclette (5) accrochée à un équipement de stockage (2, 4),
- et une étape de restitution de la bicyclette (5) où ladite bicyclette est à nouveau accrochée à un équipement de stockage (2, 4), étape au cours de laquelle on lit un identifiant contenu dans un circuit électronique de la bicyclette,
**caractérisé en ce qu'**au cours de l'étape de libération de la bicyclette, on transfère au moins l'identifiant d'utilisateur issu du support d'informations d'un utilisateur vers le circuit électronique de la bicyclette (5) sélectionnée par ledit utilisateur,
et **en ce qu'**au cours de l'étape de restitution de la bicyclette, l'identifiant lu dans le circuit électronique de la bicyclette est l'identifiant d'utilisateur précédemment transféré dans ledit circuit électronique lors de l'étape de libération.

## Claims

1. System for managing a fleet of bicycles comprising:
- a plurality of bicycles (5), each provided with an electronic circuit for receiving an identifier, the electronic circuit of the bicycle including an electronic read-write memory and recording and reading means,
- at least one item of storage equipment (2, 4) having at least one fastening zone for the bicycle, and including means for reading the identifier recorded in the electronic circuit of the bicycle placed in the said fastening zone,
- a plurality of information carriers (3) intended to be sent to users so as to enable them to access their bicycles (5), each information carrier including a user's identifier, **characterized in that** the system includes means for transferring at least the user's identifier coming from the information carrier (3) of a user to the electronic circuit of a bicycle (5) selected by the user at the moment the said selected bicycle is released,
and **in that** the user's identifier constitutes the identifier of the electronic circuit of the bicycle (5).

2. System according to claim 1, wherein each item of storage equipment (2, 4) includes a plurality of fastening zones for bicycles (5), each fastening zone including an electromechanical locking device adapted so as to lock a bicycle (5) and controlled by an electronic calculator associated with means for reading the user's identifier coming from the said information carrier (3) presented by a user, and means for temporarily writing the said user's identifier into the electronic circuit of the bicycle (5), as well as means for reading the said user's identifier when the bicycle (5) is returned.

3. System according to any one of the preceding claims, additionally including a server (1) linked to each of the items of storage equipment (2, 4) by a communication network.

4. System according to any one of the preceding claims, wherein the items of storage equipment consist of at least one terminal (2) connected to the fastening means (4) for bicycles, each terminal (2) having means (6) for reading the information carrier (3) of a user, and control means for unlocking a bicycle (5) fastened to one of the fastening devices (4), each of the fastening devices (4) including an electromechanical device for locking a bicycle.

5. System according to claim 4, wherein the terminal (2) additionally includes means for acquiring the user's personal information.

6. System according to claim 4 or claim 5, wherein the terminal (2) additionally includes means for recording information in the user's information carrier (3).

7. System according to one of the preceding claims, wherein each bicycle (5) additionally includes means for transmitting the user's identifier, recorded in the said memory, to the storage equipment (2, 4), when the bicycle is returned.

8. System according to one of the preceding claims, wherein the electronic circuit of each bicycle (5) includes radio frequency transmission means for the transmission of information between the memory of the said electronic circuit and the storage equipment.

9. System according to one of the preceding claims, wherein the electronic circuit of each bicycle (5) includes an electrical connector for transmitting information between the memory of the said electronic circuit and the storage equipment (2, 4) and for supplying the said electronic circuit.

10. Method for managing a fleet of bicycles (5), comprising:
- a step of personalising an information carrier issued to a user, a step during which at least one user's identifier is inscribed into the said information carrier,
- a step of releasing a bicycle (5) attached to storage equipment (2,4),
- a step of returning the bicycle (5) where the said bicycle is once again attached to storage equipment (2,4), a step during which an identifier contained in an electronic circuit of the bicycle is read,
**characterized in that** during the step of releasing the bicycle, at least the user's identifier coming from the information carrier of a user is transferred from the user's information carrier to the electronic circuit of the bicycle (5) selected by the said user,
and **in that**, during the step of returning the bicycle, the identifier read in the electronic circuit of the bicycle is the user's identifier previously transferred to the said electronic circuit during the release step.

## Patentansprüche

1. System zum Verwalten einer Fahrradflotte, mit:
- mehreren Fahrrädern (5), die jeweils mit einem elektronischen Schaltkreis zum Aufnehmen einer Kennung versehen sind, wobei der elektronische Schaltkreis des Fahrrads einen elektronischen RAM-Speicher sowie Aufzeichnungs- und Auslesemittel aufweist,
- zumindest einem Zwischenlagerungsgerät (2, 4) mit zumindest einem Ankopplungsbereich für Fahrräder und mit Mitteln zum Lesen der in dem elektronischen Schaltkreis des Fahrrads, das in diesem Ankopplungsbereich platziert ist, aufgezeichneten Kennung,
- mehreren Informationsträgern (3), die dazu bestimmt sind, Benutzern ausgehändigt zu werden, um ihnen den Zugang zu den Fahrrädern (5) zu ermöglichen, wobei jeder Informationsträger eine Benutzerkennung aufweist,
**dadurch gekennzeichnet, dass** das System Mittel aufweist, um zumindest die Benutzerkennung, die von dem Informationsträger (3) eines Benutzers ausgegeben wird, zum Zeitpunkt des Befehls zur Freigabe dieses ausgewählten Fahrrads an den elektronischen Schaltkreis eines von diesem Benutzer ausgewählten Fahrrads (5) zu übertragen, **und dass** die Benutzerkennung die Kennung des elektronischen Schaltkreises des Fahrrads (5) bildet.

2. System nach Anspruch 1, bei welchem jedes Zwischenlagerungsgerät (2, 4) mehrere Ankopplungsbereiche für Fahrräder (5) aufweist, von denen jeder ein elektromechanisches Verriegelungselement zum Verriegeln eines Fahrrads (5) aufweist, das durch einen elektronischen Rechner gesteuert ist, der Mitteln zum Auslesen der Benutzerkennung zugeordnet ist, die von dem besagten, von einem Benutzer präsentierten Informationsträger (3) ausgegeben wird, und Mitteln zum temporären Schreiben dieser Benutzerkennung in. den elektronischen Schaltkreis des Fahrrads (5) sowie Mitteln zum Auslesen der Benutzerkennung bei der Rückgabe eines Fahrrads (5).

3. System nach einem der vorangehenden Ansprüche, außerdem mit einem Server (1), der mit jedem der Zwischenlagerungsgeräte (2, 4) über ein Kommunikationsnetz verbunden ist.

4. System nach einem der vorangehenden Ansprüche, bei welchem die Zwischenlagerungsgeräte durch zumindest eine Klemme (2) gebildet sind, die mit Ankopplungsvorrichtungen (4) für Fahrräder verbunden ist, wobei jede Klemme (2) ein Mittel zum Auslesen (6) des Informationsträgers (3) eines Benutzers aufweist, und Steuerungsmittel zum Entriegeln eines an einer der Ankopplungsvorrichtungen (4) angebrachten Fahrrads (5), wobei jede Ankopplungsvorrichtung (4) eine elektromechanische Einrichtung zum Verriegeln eines Fahrrads aufweist.

5. System nach Anspruch 4, bei welchem die Klemme (2) außerdem ein Mittel zum Erfassen einer persönlichen Information des Benutzers aufweist.

6. System nach Anspruch 4 oder 5, bei welchem die Klemme (2) außerdem Mittel zum Aufzeichnen von Informationen in dem Informationsträger (3) des Benutzers aufweist.

7. System nach einem der vorangehenden Ansprüche, bei welchem jedes Fahrrad (5) außerdem Mittel aufweist, um bei der Rückgabe des Fahrrads die in dem Speicher aufgezeichnete Benutzerkennung an ein Zwischenlagerungsgerät (2, 4) zu übermitteln.

8. System nach einem der vorangehenden Ansprüche, bei welchem der elektronische Schaltkreis jedes Fahrrads (5) Radiofrequenz-Mittel zum Übertragen der Informationen zwischen dem Speicher des elektronischen Schaltkreises und dem Lagerungsgerät aufweist.

9. System nach einem der vorangehenden Ansprüche, bei welchem der elektronische Schaltkreis jedes Fahrrads (5) einen elektrischen Anschluss für die Übertragung von Informationen zwischen dem Speicher des elektronischen Schaltkreises und dem Lagerungsgerät (2, 4) und für die Versorgung des elektronischen Schaltkreises aufweist.

10. Verfahren zum Verwalten einer Fahrzeugflotte (5), mit den folgenden Schritten:
Personalisierung eines einem Benutzer ausgehändigten Informationsträgers, wobei in den Informationsträger zumindest eine Benutzerkennung geschrieben wird,
- Freigabe eines an einem Lagerungsgerät (2, 4) angekoppelten Fahrrads (5), und
- Rückgabe des Fahrrads (5), wobei das Fahrrad (5) wieder an einem Lagerungsgerät (2, 4) angekoppelt wird, wobei eine in einem elektronischen Schaltkreis des Fahrrads (5) vorhandene Kennung ausgelesen wird,
**dadurch gekennzeichnet, dass** bei der Freigabe des Fahrrads zumindest die Benutzerkennung, die von dem Informationsträger eines Benutzers ausgegeben wird, an den elektronischen Schaltkreis des von dem Benutzer ausgewählten Fahrrads (5) übertragen wird, und dass bei der Rückgabe des Fahrrads die aus dem elektronischen Schaltkreis des Fahrrads ausgelesene Kennung die Benutzerkennung ist, die zuvor bei der Freigabe in den elektronischen Schaltkreis übertragen worden war.
